# EUROPÄISCHE PATENTSCHRIFT

(11) **EP 1 866 345 B1**
(45) Veröffentlichungstag und Bekanntmachung des Hinweises auf die Patenterteilung: **19.05.2010**
(21) Anmeldenummer: 06725351.8
(22) Anmeldetag: 28.03.2006
(51) Int. Cl.: C08F 8/00, C08F 2/18, C08F 20/06, A61L 15/22

(54) **VERFAHREN ZUR HERSTELLUNG WASSERABSORBIERENDER POLYMERPARTIKEL**
METHOD FOR PRODUCING WATER-ABSORBENT POLYMER PARTICLES
PROCEDE DE PRODUCTION DE PARTICULES DE POLYMERE HYDROABSORBANTES

(30) Priorität: 30.03.2005 DE 102005014841
(43) Veröffentlichungstag der Anmeldung: 19.12.2007
(73) Patentinhaber: BASF SE, 67056 Ludwigshafen (DE)
(72) Erfinder: RIEGEL, Ulrich, 66849 Landstuhl (DE); DANIEL, Thomas, 67165 Waldsee (DE); HERMELING, Dieter, 67459 Böhl-Iggelheim (DE); ELLIOTT, Mark, 67063 Ludwigshafen (DE)
(86) Internationale Anmeldenummer: PCT/EP2006/061087
(87) Internationale Veröffentlichungsnummer: WO 2006/103227

(56) Entgegenhaltungen:
- EP-A- 0 632 067
- EP-A- 0 811 636
- EP-A- 1 097 946
- WO-A-93/21237
- US-A- 5 856 410
- US-A1- 2005 051 925

## Beschreibung

Die Erfindung betrifft ein Verfahren zur Herstellung wasserabsorbierender Polymerpartikel durch Polymerisation einer Monomerlösung, wobei man das Polymergel bei einer Geltemperatur von mindestens 50°C und einem Monomerumsatz von höchstens 90 mol-% dem Reaktor entnimmt.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Hydrogele werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Herstellverfahren für wasserabsorbierende Polymere werden in "Modern Superabsorbent Polymer Technology", F.L. Buchholz and A.T. Graham, Wiley-VCH, 1998, Seiten 69 bis 118 beschrieben. Dabei wird eine Monomerlösung zu einem Grundpolymer polymerisiert, beispielsweise in einem Kneter oder einem Bandreaktor.

Zur Verbesserung der Anwendungseigenschaften wird das Grundpolymer üblicherweise oberflächen- oder gelnachvernetzt. Diese Nachvernetzung ist dem Fachmann an sich bekannt und erfolgt bevorzugt in wäßriger Gelphase oder als Oberflächennachvernetzung der gemahlenen und abgesiebten Polymerpartikel.

EP-A-0 811 636 lehrt die Herstellung vernetzter Polymere in einem Kneter, wobei die Polymerisation zuerst in Abwesenheit von Scherung durchgeführt wird. Erst nach dem Gelieren der Monomerlösung und vor Erreichen der Peaktemperatur werden die Knethaken in Betrieb genommen und das Polymergel durch Scherung zerteilt.

In JP-A-11/302306 wird ein Verfahren zur Herstellung wasserabsorbierender Polymere beschrieben, bei dem die Polymerisation unter Rühren durchgeführt wird, bis ein Polymerisationsgrad von höchstens 30% erreicht ist. Der Restumsatz erfolgt auf einem kontinuierlichen Bandreaktor.

EP-A-0 955 086 lehrt die Herstellung von Polymergelen auf einem Bandreaktor, wobei auf dem Band ein gleichmäßig polymerisiertes Gel hergestellt wird.

EP-A-1 097 946 beschreibt einen verbesserten Bandreaktor zur Herstellung wasserabsorbierender Polymere, bei dem in einer vorderen Reaktionszone Wärme abgeführt und in einer hinteren Reaktionszone Wärme zugeführt wird, sowie die Regelung des Verfahrens durch berührungslose Messung der Geltemperatur. Auch hier wird das Polymergel erst nach Erreichen der Peaktemperatur zerteilt.

EP-A-0 876 888 offenbart die schonende Zerteilung des Polymergels durch Verwendung spezieller Schneidmesser. Dadurch soll das mechanische Aufbrechen von Vernetzungsstellen im Polymergel vermieden und der Anteil an Extrahierbaren im Endprodukt vermindert werden.

Die WO-A-03/38402 lehrt die Herstellung vernetzter Polymere in einem kontinuierlichen Knetreaktor. Die Reaktionswärme wird zumindest teilweise durch Verdampfung des als Lösungsmittel vorhandenen Wassers abgeführt.

Aufgabe der vorliegenden Erfindung war es ein verbessertes Verfahren zur Herstellung wasserabsorbierender Polymerpartikel bereitzustellen, wobei insbesondere der Anteil an Extrahierbaren niedrig sein sollte. Insbesondere war es eine Aufgabe ein verbessertes Verfahren zur Herstellung wasserabsorbierender Polymerpartikel bereitzustellen, wobei der Feststoffgehalt der Monomerlösung und die Raum-Zeit-Ausbeute im Reaktor hoch sein sollte.

Gelöst wurde die Aufgabe durch ein Verfahren zur Herstellung wasserabsorbierender Polymerpartikel durch Umsetzung einer Monomerlösung zu einem Polymergel, dadurch gekennzeichnet, dass das Polymergel dem Reaktor entnommen wird, wenn die Temperatur des bei der Polymerisation entstehenden Poly-mergels mindestens 50°C und der Monomerumsatz höchstens 90 mol-% beträgt.

Die Polymergele weisem vorzugsweise eine dynamische Viskosität von mindestens 1.000 mPas, besonders bevorzugt von mindestens 5.000 mPas, ganz besonders bevorzugt von mindestens 25.000 mPas, auf.

Der Monomerumsatz ist der Quotient aus Restmonomer und ursprünglich eingesetztem Monomer. Der Restmonomergehalt kann beispielsweise nach der von der EDANA (European Disposables and Nonwovens Association) empfohlenen Testmethode Nr. 410.2-02 "Residual monomers" bestimmt werden.

Es ist aber auch möglich den Monomerumsatz über die freigesetzte Reaktionswärme zu bestimmen.

Das erfindungsgemäße Verfahren wird vorzugsweise kontinuierlich durchgeführt.

Die Polymerisation kann in dem Reaktor als statische oder dynamische Polymerisation durchgeführt werden. Bei der statischen Polymerisation wird die Reaktionsmischung im Reaktor nicht aktiv durchmischt. Geeignete Reaktoren für die statische Polymerisation sind Bandreaktoren, wie in DE-A-38 25 366 und US-6,241,928 beschrieben. Bei der dynamischen Polymerisation wird die Reaktionsmischung im Reaktor aktiv durchmischt. Geeignete Reaktoren für die dynamische Polymerisation sind Knetreaktoren, wie in WO-A-01/38402 und WO-A-03/022896 beschrieben. Vorzugsweise wird eine statische Polymerisation durchgeführt.

Die Temperatur des beider Polymerisation entstanduren Polymogels bei der das Polymergel dem Reaktor entnommen wird beträgt vorzugsweise mindestens 65°C, bevorzugt mindestens 75°C, besonders bevorzugt mindestens 80°C, ganz besonders bevorzugt mindestens 85°C.

Der Monomerumsatz bei dem das Polymergel dem Reaktor entnommen wird beträgt vorzugsweise höchstens 85 mol-%, bevorzugt höchstens 80 mol-%, besonders bevorzugt höchstens 75 mol%, ganz besonders bevorzugt höchstens 70 mol%.

In eine bevorzugten Ausführungsform der vorliegendenden Erfindung wird das Polymergel vor Erreichen der Peaktemperatur dem Reaktor entnommen. Die Peaktemperatur ist die höchste Temperatur, die im Verlauf der Polymerisation erreicht wird, und beträgt üblicherweise 80 bis 110°C, vorzugsweise 92 bis 105°C, besonders bevorzugt 96 bis 102°C.

Der Feststoffgehalt der in dem erfindungsgemäßen Verfahren einsetzbaren Monomerlösung beträgt vorzugsweise 23 bis 70 Gew.%, besonders bevorzugt 30 bis 50 Gew.-%, ganz besonders bevorzugt 35 bis 45 Gew.%. Der Feststoffgehalt ist die Summe aller Monomere, wobei Vernetzer nicht berücksichtigt werden.

Die Starttemperatur der Polymerisation beträgt vorzugsweise 0 bis 30°C, besonders bevorzugt 5 bis 25°C, ganz besonders bevorzugt 10 bis 20°C. Die Starttemperatur ist die Temperatur der Monomerlösung, die in den Reaktor dosiert wird.

Vorzugsweise wird das den Reaktor verlassende Polymergel zerteilt. Die Apparate, mit denen das Polymergel zerteilt werden kann, unterliegen keiner Beschränkung; beispielsweise können Fleischwölfe, Kneter und Schneidmesser verwendet werden. In einem Fleischwolf wird das Polymergel durch eine Lochplatte gepresst. Ein Kneter ist ein Apparat mit mindesten einer Welle, wobei die rotierende Welle das Polymergel durch Scherkräfte zerteilt. Kneter sind bevorzugt.

Nach dem Zerteilen weist das Polymergel vorzugsweise zu mindestens 90 Gew.-% eine Partikelgröße von weniger als 50 mm auf.

In einer bevorzugten Ausführungsform wird dem Polymergel vor, während, oder nach dem Zerteilen mindestens ein Trennmittel zugesetzt. Vorzugsweise wird das Trennmittel unmittelbar vor oder während dem Zerteilen zugesetzt. Unmittelbar vor dem Zerteilen bedeutet hierbei vorzugsweise bis zu 15 Minuten, besonders bevorzugt bis zu 10 Minuten, ganz besonders bevorzugt bis zu 5 Minuten, vor dem Zerteilen. Trennmittel vermindern das Zusammenkleben der zerteilten Gelpartikel. Geeignete Trennmittel sind Tenside, beispielsweise mit einem HLB-Wert von weniger als 12, wie Sorbitanmonooleat, anorganische Pulver, wie pyrogene Kieselsäure, und organische Pulver, wie wasserabsorbierende Polymerpartikel. Der HLB-Wert ist ein Maß für die Wasser- bzw. Öl-Löslichkeit von Tensiden und kann nach üblichen Methoden bestimmt, beispielsweise gemäß den in "Surface Active Agents and Detergents", Band 2, Interscience Publishers, Inc., Seiten 479 ff, angegebenen Methoden, oder Tabellenwerken entnommen werden. Die Pulver weisen üblicherweise eine mittlere Partikelgröße von weniger als 300 µm, vorzugsweise weniger als 250 µm, besonders bevorzugt weniger als 200 µm, ganz besonders bevorzugt von weniger als 150 µm, auf. Geeignete wasserabsorbierende Polymerpartikel sind vorzugsweise Polymerpartikel, die während der Herstellung wasserabsorbierender Polymerpartikel anfallen und bei der Klassierung als Unterkorn abgetrennt werden. Die Partikelgröße wird nach der von der EDANA (European Disposables and Nonwovens Association) empfohlenen Testmethode Nr. 420.2-02 "Particle size distribution" bestimmt. Vorzugsweise werden getrocknete wasserabsorbierende Polymerpartikel mit einem Wassergehalt von weniger als 10 Gew.-%, vorzugsweise von weniger als 5 Gew.%, besonders bevorzugt von weniger als 3 Gew.%, verwendet. Der Wassergehalt kann beispielsweise nach der von der EDANA (European Disposables and Nonwovens Association) empfohlenen Testmethode Nr. 430.2-02 "Moisture content" bestimmt werden

Dadurch, dass im erfindungsgemäßen Verfahren das Polymergel in Gegenwart ausreichendender Monomergehalte zerteilt wird, können durch Scherung aufgetretene Schäden ausheilen.

Das zerteilte Polymergel läßt man typischerweise nachreagieren. Dies geschieht, wie auch die vorgelagerte Polymerisation und das Zerteilen des Polymergels, vorzugsweise unter Inertgas, d.h. einem Gas, das die Polymerisation nicht beeinflußt, beispielsweise Edelgase, Stickstoff, Kohlendioxid oder Wasserdampf, besonders bevorzugt unter Stickstoff. Das Polymergel kann auch bei vermindertem Druck gelagert werden, vorzugsweise bei einem Druck von unter 900 mbar, besonders bevorzugt unter 800 mbar, ganz besonders bevorzugt unter 500 mbar.

Für die Nachreaktion können übliche Behälter, vorzugsweise zylindrische Behälter mit trichterförmigen Boden verwendet werden. Der Behälter kann belüftet oder mit Inertgas durchströmt werden. Weiterhin kann der Behälter einen gegenüber der Umgebung verminderten Druck aufweisen. Beispielsweise kann damit Wasserdampf aus dem Gel abgeführt werden. Dadurch wird eine Überhitzung des Polymergels verhindert und der Wassergehalt des Polymergels gesenkt, was die anschließende Trocknung erleichtert.

Das Polymergel kann aber auch während der Nachreaktion bewegt, beispielsweise gerührt, werden.

Die Dauer der Nachreaktion nach der Entnahme des Polymergels aus dem Polymerisationsreaktor beträgt typischerweise bis 48 Stunden, vorzugsweise 0,2 bis 30 Stunden, besonders bevorzugt 0,5 bis 24 Stunden, ganz besonders bevorzugt 2 bis 12 Stunden, und die Temperatur beträgt während der Nachreaktion beispielsweise 50 bis 130°C, vorzugsweise 70 bis 100°C, besonders bevorzugt 80 bis 95°C.

Durch die Nachreaktion wird die Polymerisation bis auf den gewünschten Monomerumsatz von vorzugsweise mindestens 98,5 mol%, bevorzugt mindestens 99 mol-%, besonders bevorzugt mindestens 99,5 mol%, ganz besonders bevorzugt mindestens 99,9 mol%, fortgesetzt.

Der Restmonomerengehalt im Gel wird durch die Nachreaktion typischerweise unter 2 Gew.%, vorzugsweise unter 1,0 Gew.-%, bevorzugt unter 0,5 Gew.%, besonders bevorzugt unter 0,2 Gew.%, ganz besonders bevorzugt unter 0,1 Gew.%, gesenkt.

Das erfindungsgemäße Verfahren ermöglicht die Verwendung kleinerer Reaktoren als bisher üblich. Die dabei erreichbaren Einsparungen sind deutlich größer als die Aufwendungen für den Nachreaktionsbehälter.

Das erfindungsgemäße Verfahren kann auch zur Kapazitätserhöhung bestehender Bandreaktoren verwendet werden. Beispielsweise dadurch, dass der Bandreaktor durch einen zusätzlichen Knetreaktor ergänzt wird. Dies ermöglicht eine höhere Bandgeschwindigkeit und damit einen größeren Durchsatz, wobei sich die Peaktemperatur nach hinten, beispielsweise bis über das Band hinaus, verschiebt.

Dies bedeutet, dass mit den erfindungsgemäßen Verfahren höhere Durchsätze möglich sind und trotzdem wasserabsorbierende Polymerpartikel mit verbesserter Qualität erzeugt werden können.

Vorzugsweise sind die gemäß dem erfindungsgemäßen Verfahren hergestellten wasserabsorbierenden Polymerpartikel getrocknet, klassiert und nachvernetzt.

Die so hergestellten wasserabsorbierenden Polymerpartikel weisen hohe Zenrifugenretentionskapazitäten (CRC), hohe Absorptionen unter Druck (AUL0.3psi) und niedrige lösliche Anteile (Extrahierbare 16h) auf.

Die vernetzten, wasserabsorbierenden Polymerpartikel werden beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Die vernetzten, wasserabsorbierenden Polymerpartikel weisen typischerweise eine Zentrifugenretentionskapazität (CRC) von 10 bis 60 g/g, vorzugsweise von mindestens 15 g/g, besonders bevorzugt mindestens 20 g/g, ganz besonders bevorzugt mindestens 25 g/g, auf. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Wasserabsorbierende Polymerpartikel können durch Polymerisation einer Monomerlösung, enthaltend
a) mindestens ein ethylenisch ungesättigtes, säuregruppentragendes Monomer,
b) mindestens einen Vernetzer,
c) gegebenenfalls ein oder mehrere mit a) copolymerisierbare ethylenisch und/oder allylisch ungesättigte Monomeren und
d) gegebenenfalls ein oder mehrere wasserlösliche Polymeren, auf die die Monomere a), b) und ggf. c) zumindest teilweise aufgepfropft werden können,
   wobei das dabei erhaltene Grundpolymer getrocknet, klassiert, mit
e) mindestens einem Nachvernetzer,
nachbehandelt, getrocknet und thermisch nachvernetzt wird, hergestellt werden.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere a), insbesondere Acrylsäure, enthalten vorzugsweise bis zu 0,025 Gew.% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 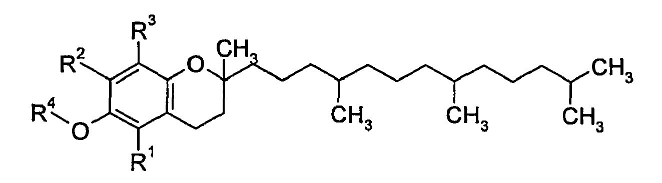 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R⁴ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinonhalbether, jeweils bezogen auf Acrylsäure, wobei Acrylsäuresalze rechnerisch als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die wasserabsorbierenden Polymerpartikel sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und DE-A-103 31 450 beschrieben, gemischte Acrylate, die neben Acrylatgruppen weitere ethylenisch ungesättigte Gruppen enthalten, wie in DE-A-103 31 456 und der deutschen Patentanmeldung mit dem Aktenzeichen 10355401.7 beschrieben, oder Vernetzermischungen, wie beispielsweise in DE-A-195 43 368, DE-A-196 46 484, WO-A-90/15830 und WO-A-02/32962 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, inbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO-A-03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3-bis 5-fach ethoxylierten und/oder propoxylierten Glyzerins. Diese zeichnen sich durch besonders niedrige Restgehalte (typischerweise unter 10 Gew.-ppm) in den wasserabsorbierenden Polymerpartikeln aus und die wässrigen Extrakte der damit hergestellten wasserabsorbierenden Polymerpartikel weisen eine fast unveränderte Oberflächenspannung (typischerweise mindestens 0,068 N/m) im Vergleich zu Wasser gleicher Temperatur auf.

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die wasserabsorbierenden Polymerpartikel werden durch Polymerisation in wässriger Lösung nach dem Verfahren der sogenannten Gelpolymerisation hergestellt. Dabei werden wässrige Lösungen eines oder mehrerer hydrophiler Monomere und gegebenenfalls einer geeigneten Pfropfgrundlage in Gegenwart eines Radikalinitiators, bevorzugt ohne mechanische Durchmischung unter Ausnutzung des Trommsdorff-Norrish-Effektes (Makromol. Chem. 1, 169 (1947)), polymerisiert. Der Feststoffgehalt derwässrigen Lösungen, d.h. der Gehalt an Monomeren, beispielsweise Acrylsäure und Natriumacrylat, beträgt üblicherweise 23 bis 70 Gew.%, vorzugsweise 30 bis 50 Gew.-%, besonders bevorzugt 35 bis 45 Gew.%. Die wässrige Monomerlösung wird mit einer Temperatur von 0 bis 30°C, vorzugsweise 10 bis 25°C, besonders bevorzugt 15 bis 20°C, auf das Band aufgebracht. Die Polymerisationsreaktion kann sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff und/oder Wasserdampf, ausgeführt werden. Zur Auslösung der Polymerisation können energiereiche elektromagnetische Strahlen oder die üblichen chemischen Polymerisationsinitiatoren herangezogen werden, beispielsweise organische Peroxide, wie Benzoylperoxid, tert.-Butylhydroperoxid, Methylethylketonperoxid, Cumolhydroperoxid, Azoverbindungen, wie Azodüsobutyronitril, sowie anorganische Peroxoverbindungen, wie (NH₄)₂S₂O₈ oder K₂S₂O₈ oder H₂O₂. Sie können gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie Mannichaddukte aus Sulfinsäuren, Aldehyden und Aminoverbindungen, wie sie in der DE-A-13 01 566 beschrieben sind, verwendet werden.

Die erhaltenen Gele werden beispielsweise zu 0 bis 100 mol-%, bevorzugt zwischen 5 und 90 mol%, besonders bevorzugt zwischen 25 und 80 mol%, bezogen auf eingesetztes Monomer neutralisiert, wobei die üblichen Neutralisationsmittel verwendet werden können, bevorzugt Alkalimetallhydroxide oder -oxide, besonders bevorzugt jedoch Natriumhydroxid, Natriumcarbonat und Natriumhydrogencarbonat. Der pH-Wert des neutralisierten Grundpolymers beträgt üblicherweise zwischen 5 und 7,5, vorzugsweise zwischen 5,6 und 6,2.

Üblicherweise wird die Neutralisation durch Einmischung des Neutralisationsmittels als wässrige Lösung oder bevorzugt auch als Feststoff erreicht. Die Neutralisation wird vorzugsweise vor der Polymerisation in der Monomerlösung durchgeführt. Es kann aber auch das Polymergel neutralisiert oder nachneutralisiert werden. Hierzu wird das Gel typischerweise mechanisch zerkleinert, beispielsweise mittels eines Fleischwolfes und das Neutralisationsmittel wird aufgesprüht, übergestreut oder aufgegossen, und dann sorgfältig untergemischt. Dazu kann die erhaltene Gelmasse noch mehrmals zur Homogenisierung gewolft werden.

Die neutralisierte Gelmasse wird beispielsweise mit einem Band- oder Walzentrockner getrocknet bis der Restfeuchtegehalt vorzugsweise unter 10 Gew.-%, insbesondere unter 5 Gew.-% liegt. Das getrocknete Grundpolymer wird hiernach gemahlen und gesiebt, wobei zur Mahlung üblicherweise Walzenstühle, Stiftmühlen oder Schwingmühlen eingesetzt werden können. Die Partikelgröße des gesiebten Grundpolymers liegt vorzugsweise im Bereich 45 bis 1000 µm, besonders bevorzugt bei 45 bis 850 µm, ganz besonders bevorzugt bei 100 bis 800 µm und noch mehr bevorzugt bei 100 bis 700 µm. Weitere bevorzugte Korngrößen liegen im Bereich 100 bis 500 µm, 300 bis 600 µm, kleiner als 600 µm, kleiner als 400 µm, besonders bevorzugt kleiner als 300 µm, und am meisten bevorzugt kleiner als 150 µm. In diesen Bereichen liegen mindestens 80%, bevorzugt mindestens 90% aller Partikel.

Der CRC-Wert [g/g] des Grundpolymers kann nach den in der Beschreibung angegebenen Methoden gemessen werden und ist bevorzugt mindestens 27, insbesondere mindestens 29, besonders bevorzugt mindestens 31, und höchstens 39, bevorzugt höchstens 35.

Der AUL0.3psi-Wert [g/g] des Grundpolymers kann nach den in der Beschreibung angegebenen Methoden gemessen werden und ist bevorzugt mindestens 14, insbesondere mindestens 17, besonders bevorzugt mindestens 21, und höchstens 27, bevorzugt höchstens 23.

Die Nachvernetzung von wasserabsorbierenden Polymerpartikelen wird in der Regel so durchgeführt, dass eine Lösung des Oberflächennachvernetzers auf das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Bevorzugt ist das Aufsprühen einer Lösung des Vernetzers in Reaktionsmischern oder Misch- und Trocknungsanlagen, wie beispielsweise Lödige®-Mischer, BEPEX®-Mischer, NAUTA®-Mischer, SCHUGI®-Mischer, NARA®-Trockner und PROCESSALL®. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 60 bis 200°C, und besonders bevorzugt bei 70 bis 185°C. Die bevorzugte Verweilzeit bei dieser Temperatur im Reaktionsmischer oder Trockner beträgt unter 60, bevorzugt unter 30 Minuten, besonders bevorzugt unter 10 Minuten.

Die Nachvernetzer e) können allein oder in Kombination mit anderen Nachvernetzern verwendet werden, beispielsweise Ethylenglykoldiglycidylether, Diethylenglykoldiglycidylether, Polyethylenglykoldiglycidylether, Propylenglykoldiglycidylether, Dipropylenglykoldiglycidylether, Polypropylenglykoldiglycidylether, Glycerindiglycidylether, Polyglycerindiglycidylether, Epichlorhydrin, Etylendiamin, Ethylenglykol, Diethylenglykol, Triethylenglykol, Polyethylenglykol, Propylenglykol, Dipropylenglykol, Tripropylenglykol, Polypropylenglykol, Butylenglykol, 1,3-Propandiol, 1,4-Butandiol, Bisphenol A, Glycerin, Trimethylolpropan, Pentaerythrit, Sorbitol, Diethanolamin, Triethanolamin, Etylendiamin, Ethylencarbonat, Propylencarbonat, 2-Oxazolidone, wie 2-Oxazolidinon oder N-Hydroxyethyl-2-oxazolidinon, Morpholin-2,3-dione, wie N-2-Hydroxyethyl-morpholin-2,3-dion, N-Methyl-morpholin-2,3-dion , N-Ethyl-morpholin-2,3-dion und/oder N-tert.-Butyl-morpholin-2,3-dion, 2-Oxotetrahydro-1,3-oxazin, N-Acyl-2-oxazolidone, wie N-Acetyl-2-oxazolidon, bicyclische Amidacetale, wie 5-Methyl-1-aza-4,6-dioxa-bicyclo[3.3.0]octan, 1-Aza-4,6-dioxa-bicyclo[3.3.0]octan und/oder 5-Isopropyl-1-aza-4,6-dioxa-bicyclo[3.3.0]octan, und/oder Bis- und Poly-2-oxazolidinone.

Der Nachvernetzer wird bevorzugt in nicht selbst-reaktiven Lösemitteln gelöst, bevorzugt in niederen Alkoholen, wie beispielsweise Methanol, Ethanol, Isopropanol, Propylenglykol, Ethylenglykol, vorzugsweise Isopropanol, ganz besonders bevorzugt in wässrigen Lösungen solcher geeigneter Alkohole, wobei der Alkoholgehalt der Lösung 10 bis 90 Gew.-%, besonders bevorzugt zwischen 25 bis 70 Gew.-%, insbesondere zwischen 30 bis 50 Gew.% beträgt.

Der Nachvernetzer e) wird dabei in einer Menge von 0,01 bis 1 Gew.%, bezogen auf das eingesetzte Polymer, verwendet, und die Vernetzerlösung selbst in einer Menge von 1 bis 20 Gew.%, bevorzugt 3 bis 15 Gew.-%, bezogen auf das eingesetzte Polymer, verwendet.

Bevorzugte Nachvernetzer e) sind 2-Oxazolidone, wie 2-Oxazolidinon oder N-Hydroxyethyl-2-oxazolidinon, N-Acyl-2-oxazolidone, wie N-Acetyl-2-oxazolidon, 2-Oxotetrahydro-1,3-oxazin, bicyclisches Amidacetale, wie 5-Methyl-1-aza-4,6-dioxabicyclo[3.3.0]octan, 1-Aza-4.,6-dioxa-bicyclo[3.3.0]octan und/oder 5-Isopropyl-1-aza-4,6-dioxa-bicyclo[3.3.0]octan, Bis-2-oxazolidone und/oder Poly-2-oxazolidone.

Besonders bevorzugte Nachvernetzer e) sind 2-Oxazolidinon, N-Hydroxyethyl-2-oxazolidinon oder N-Hydroxypropyl-2-oxazolidinon.

Der CRC-Wert [g/g] der erfindungsgemäß hergestellten nachvernetzten wasserabsorbierenden Polymerpartikel kann nach den in der Beschreibung angegebenen Methoden gemessen werden und ist bevorzugt mindestens 20, insbesondere mindestens 24, besonders bevorzugt mindestens 25, insbesondere mindestens 26, insbesondere bevorzugt mindestens 30.

Der AUL0.7psi-Wert [g/g] der erfindungsgemäß hergestellten nachvernetzten wasserabsorbierenden Polymerpartikel kann nach den in der Beschreibung angegebenen Methoden gemessen werden und ist bevorzugt mindestens 15, insbesondere mindestens 21, besonders bevorzugt mindestens 22, insbesondere mindestens 23, insbesondere bevorzugt mindestens 25.

Der Extrahierbare 16h-Wert [Gew.-%] der erfindungsgemäß hergestellten nachvernetzten wasserabsorbierenden Polymerpartikel kann nach den in der Beschreibung angegebenen Methoden gemessen werden und beträgt bevorzugt weniger als 20, insbesondere weniger als 15, besonders bevorzugt weniger als 12, insbesondere weniger als 10, insbesondere bevorzugt weniger als 8.

Erfindungsgemäß bevorzugte Korngrößenbereiche sind 150 bis 850 µm, vorzugsweise 50 bis 500 µm oder 150 bis 700 µm, besonders bevorzugt 50 bis 400 µm oder 150 bis 600 µm, ganz besonders bevorzugt 50 bis 300 µm oder 150 bis 500 µm. In diesen Bereichen liegen mindestens 80 Gew.%, bevorzugt mindestens 90 Gew.-%, und am meisten bevorzugt bis zu 100 Gew.% aller Partikel.

Zur Bestimmung der Güte der Nachvernetzung wird das getrocknete Hydrogel mit den Testmethoden geprüft, die nachfolgend beschrieben sind:

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

### Zentrifugenretentionskapazität (CRC Centrifuge Retention Capacity)

Die Zentrifugenretentionskapazität kann auch nach der von der EDANA (European Disposables and Nonwovens Association) empfohlenen Testmethode Nr. 441.2-02 "Centrifuge retention capacity" bestimmt werden.

### Absorption unter einem Druck (AUL Absorbency Under Load) von 0,7 psi (4830 Pa)

Die Absorption unter Druck kann auch nach der von der EDANA (European Disposables and Nonwovens Association) empfohlenen Testmethode Nr. 442.2-02 "Absorption under pressure" bestimmt werden.

### Extrahierbare 16h

Der Gehalt an extrahierbaren Bestandteilen der wasserabsorbierenden Polymerpartikel kann nach der von der EDANA (European Disposables and Nonwovens Association) empfohlenen Testmethode Nr. 470.2-02 "Determination of extractable polymer content by potentiometric titration" bestimmt werden.

Die EDANA-Testmethoden sind beispielsweise erhältlich bei der European Disposables and Nonwovens Association, Avenue Eugène Plasky 157, B-1030 Brüssel, Belgien.

### Beispiele

### Beispiel 1:

Aus Acrylsäure (stabilisiert mit 50 Gew.-ppm Hydrochinonmonomethylether), die zu 75 mol-% mit 50 gew.%iger Natronlauge unter Kühlen neutralisiert und mit Wasser verdünnt wurde, stellte man 1,5 kg einer Monomerlösung mit 35 Gew.-% Feststoffgehalt her. Unter dem Feststoffgehalt versteht sich die Summe der Gewichtsanteile Natriumacrylat und Acrylsäure im Verhältnis zur Masse der gesamten Monomerlösung. Zu dieser Lösung, die auf ca. 10°C abgekühlt wurde, wurden 1,71 g Triacrylat des insgesamt 3-fach ethoxylierten Glycerins zugefügt und untergemischt. Die Monomerlösung wurde in einen oben offenen Tiefgefrierbeutel aus Polyethylen überführt und ca. 20 Minuten zur Entfernung von Sauerstoff mit Stickstoff gespült. In die Lösung hängte man mittig ein Thermoelement und fügte mittels einer Eppendorfpipette und unter Durchmischen der Lösung mit durchperlendem Stickstoff als Initiatoren nacheinander 1,5 g Natriumpersulfat, gelöst in 13 g Wasser, 0,03 g Ascorbinsäure, gelöst in 10 g Wasser und 0,09 g Wasserstoffperoxid (30 Gew.%ig), gelöst in 1,3 g Wasser, hinzu. Der überstehende Gasraum wurde bis zur Entnahme des Polymergels weiter mit Stickstoff überlagert. Die Polymerisation setzte ein, und bei einer Innentemperatur von 91 °C wurde die Tüte schnell durch rasches Umdrehen und Ausdrücken des Gels direkt in einen laufenden, vorgewärmten und inseitig mit Stickstoff überlagerten Fleischwolf hinein entleert. Der Monomerumsatz betrug ca. 90 mol%. Das noch weiter polymerisierende Gel wurde dabei zerteilt und hinter der Lochscheibe des Fleischwolfs in einen mit Stickstoff gespülten Tiefgefrierbeutel aus Polyethylen aufgefangen. Dann ließ man noch 15 Minuten zu Ende polymerisieren, wobei man das Gel bei 90°C im Umluftschrank temperte. Anschließend wurde das Gel 3 Stunden bei 160 °C im Umluftschrank auf teflonisierten Blechen getrocknet, mit einer Laborstiftmühle gemahlen und auf eine Korngröße von 250 bis 850 µm abgesiebt. Die Eigenschaften des so erhaltenen trockenen Grundpolymers sind in der Tabelle 1 aufgelistet.

Das Grundpolymer wurde im Labormischer nachvernetzt. Es wurden 20 g Grundpolymer in einem Waring-Labormischer in einem Mischaufsatz mit stumpfem Rührwerk vorgelegt, und mittels einer Injektionsspritze wurde die Nachvernetzungslösung bei kleiner Drehzahl unter guter Durchmischung langsam hinzugetropft. Die Nachvernetzungslösung hatte folgende Zusammensetzung: 1,5 g Isopropanol, 3,0 g Wasser, 0,02 g 2-Oxazolidinon. Nach guter Durchmischung wurde das feuchte Polymer auf einem Uhrglas in einem Umlufttrockenschrank bei 180°C für eine Stunde getrocknet. Abschließend wurde das getrocknete Polymer über ein 850 µm Sieb abgesiebt, um Klumpen zu entfernen. Es wurden an diesen Polymeren die CRC sowie die AUL0.7psi bestimmt; die Werte sind in Tabelle 1 eingetragen.

### Beispiel 2:

Es wurde verfahren wie unter Beispiel 1, jedoch wurde das Gel schon bei einer Geltemperatur von 83 °C entnommen. Bei der Gelentnahme betrug der Monomerumsatz ca. 80 mol-%.

### Beispiel 3:

Es wurde verfahren wie unter Beispiel 1, jedoch wurde das Gel schon bei einer Geltemperatur von 58 °C entnommen, und es wurde noch 30 Minuten nach der Zerteilung auspolymerisieren gelassen. Bei der Gelentnahme betrug der Monomerumsatz ca. 55 mol-%.

### Beispiel 4:

Es wurde verfahren wie unter Beispiel 1, jedoch wurde das Gel bei einer Geltemperatur von 87 °C entnommen, direkt in einen vorgewärmten und mit Stickstoff gespülten zweiwelligen Laborkneter entleert und in diesem Kneter durch Kneten sofort zerteilt. Bei der Gelentnahme betrug der Monomerumsatz ca. 85 mol-%. Dann ließ man noch ca. 10 Minuten im Kneter ausreagieren.

### Beispiel 5:

Es wurde verfahren wie unter Beispiel 1, jedoch wurde das Gel bei einer Geltemperatur von 85 °C entnommen, direkt in einen vorgewärmten und mit Stickstoff gespülten zweiwelligen Laborkneter entleert, wobei man auf 1,5 kg Gel noch 150 g feines (Korngröße 50 bis 300 µm) trockenes wasserabsorbierendes Polymer als Trennmittel hinzufügte, und im Kneter durch Kneten sofort zerteilte. Bei der Gelentnahme betrug der Monomerumsatz ca. 85 mol-%. Dann ließ man noch ca. 10 Minuten im Kneter ausreagieren. Das Gel wurde dabei sehr fein zerteilt und die Oberfläche war nur wenig klebrig.

### Beispiel 6:

Es wurde verfahren wie unter Beispiel 1, jedoch wurden nur 1,2 g Triacrylat des insgesamt 3-fach ethoxylierten Glycerins zugefügt, und das Gel wurde bei einer Geltemperatur von 86 °C entnommen, direkt in einen vorgewärmten und mit Stickstoff gespülten zweiwelligen Laborkneter entleert, wobei man auf 1,5 kg Gel noch 150 g feines (Komgrösse 50 bis 300 µm) trockenes wasserabsorbierendes Polymer als Trennmittel hinzufügte, und im Kneter durch Kneten sofort zerteilte. Bei der Gelentnahme betrug der Monomerumsatz ca. 85 mol%. Man ließ noch ca. 10 Minuten im Kneter ausreagieren. Das Gel wurde dabei sehr fein zerteilt und die Oberfläche war nur wenig klebrig.

### Beispiel 7:

Es wurde verfahren wie unter Beispiel 1, jedoch wurde das Gel bei einer Geltemperatur von 81 °C entnommen, direkt in einen vorgewärmten und mit Stickstoff gespülten zweiwelligen Laborkneter entleert, wobei man auf 1,5 kg Gel noch 1,2 g Span® 20 (Sorbitanmonolaurat) dispergiert in ca. 50 ml Wasser als Trennmittel hinzufügte, und in diesem Kneter durch Kneten sofort zerteilte. Bei der Gelentnahme betrug der Monomerumsatz ca. 80 mol-%. Man ließ noch ca. 10 Minuten im Kneter ausreagieren. Das Gel wurde dabei fein zerteilt und war kaum klebrig.

### Vergleichsbeispiel 1:

Es wurde verfahren wie unter Beispiel 1, jedoch ließ man das Gel in der zusätzlich nach außen thermisch isolierten Kunststofftüte vollständig auspolymerisieren, wobei die Peaktemperatur in der Mitte der Reaktionsmasse ca. 100°C betrug, und das Gel wurde erst ca. 60 Minuten nach Erreichen der Peaktemperatur und bei beginnender Abkühlung in den Fleischwolf entleert und zerkleinert. Bei der Gelentnahme betrug der Monomerumsatz mehr als 98 mol-%. Das zerkleinerte Gel wurde anschließend sofort wie in Beispiel 1 beschrieben getrocknet, gemahlen und gesiebt. Das Polymer wurde in diesem Fall durch Scherung beschädigt, was in höheren extrahierbaren Polymeranteilen des Grundpolymers und geringerer AUL 0.7 psi des nachvernetzten Polymers resultiert.

**Tabelle 1 - Eigenschaften der Grundpolymere und der nachvernetzten Polymere**

| | CRC [g/g] | Extrahierbare Anteile 16h [Gew.%] | CRC* [g/g] | AUL 0.7 psi* [g/g] |
|---|---|---|---|---|
| Beispiel 1 | 37,2 | 9,7 | 29,5 | 24,0 |
| Beispiel 2 | 38,0 | 9,2 | 29,8 | 24,2 |
| Beispiel 3 | 37,9 | 9,0 | 30,0 | 24,5 |
| Beispiel 4 | 37, 5 | 9,3 | 30,1 | 24,0 |
| Beispiel 5 | 33,0 | 7,8 | 27,6 | 24,7 |
| Beispiel 6 | 36,8 | 8,7 | 29,3 | 24,1 |
| Beispiel 7 | 37,0 | 10,0 | 30,0 | 23,9 |
| Vergleichsbeispiel 1 | 39,5 | 12,1 | 31,5 | 22,0 |

| | | | | |
|---|---|---|---|---|
| *) nachvernetztes Polymer | | | | |

## Patentansprüche

1. Verfahren zur Herstellung wasserabsorbierender Polymerpartikel durch Umsetzung einer Monomerlösung zu einem Polymergel, **dadurch gekennzeichnet, dass** das Polymergel dem Reaktor entnommen wird, wenn die Temperatur des bei der Polymerisation entstehenden Polymergels mindestens 50°C und der Monomerumsatz höchstens 90 mol-% beträgt.

2. Verfahren gemäß Anspruch 1, **dadurch gekennzeichnet, dass** in dem Reaktor eine statische Polymersation durchgeführt wird.

3. Verfahren gemäß Anspruch 1 oder 2, **dadurch gekennzeichnet, dass** das Polymergel dem Reaktor entnommen wird, wenn die Temperatur des bei der Polymerisation entstehenden Polysurgels mindestens 65°C beträgt.

4. Verfahren gemäß einem der Ansprüche 1 bis 3, **dadurch gekennzeichnet, dass** das Polymergel dem Reaktor vor Erreichen der Peaktemperatur, welches die höchste Temperatur ist, die im Verlauf der Polymerisation enricht wird, entnommen wird.

5. Verfahren gemäß Anspruch 4, **dadurch gekennzeichnet, dass** die Peaktemperatur im Bereich von 80 bis 110°C liegt.

6. Verfahren gemäß einem der Ansprüche 1 bis 5, **dadurch gekennzeichnet, dass** der Feststoffgehalt der Monomerlösung von 23 bis 70 Gew.-% beträgt.

7. Verfahren gemäß einem der Ansprüche 1 bis 6, **dadurch gekennzeichnet, dass** die Starttemperatur der Polymerisation von 0 bis 30°C beträgt.

8. Verfahren gemäß einem der Ansprüche 1 bis 7, **dadurch gekennzeichnet, dass** das Polymergel zerteilt wird.

9. Verfahren gemäß Anspruch 8, **dadurch gekennzeichnet, dass** dem Polymergel mindestens ein Trennmittel zugesetzt wird.

10. Verfahren gemäß Anspruch 9, **dadurch gekennzeichnet, dass** getrocknete wasserabsorbierende Polymerpartikel als Trennmittel verwendet werden.

11. Verfahren gemäß Anspruch 9 oder 10, **dadurch gekennzeichnet, dass** das Trennmittel eine mittlere Partikelgröße von weniger als 300 µm aufweist, bestimmt nach EDANA 420.2-02.

12. Verfahren gemäß einem der Ansprüche 8 bis 11, **dadurch gekennzeichnet, dass** das Polymergel in einem Kneter zerteilt wird.

13. Verfahren gemäß einem der Ansprüche 8 bis 12, **dadurch gekennzeichnet, dass** das Polymergel nach dem Zerteilen für 0,2 bis 12 Stunden unter Inertgas und/oder bei Unterdruck gelagert wird.

14. Verfahren gemäß einem der Ansprüche 1 bis 13, **dadurch gekennzeichnet, dass** das Polymergel nachneutralisiert wird.

15. Verfahren gemäß einem der Ansprüche 1 bis 14, **dadurch gekennzeichnet, dass** das Polymergel getrocknet, klassiert und nachvernetzt wird.

## Claims

1. A process for producing water-absorbing polymeric particles by reacting a monomer solution to form a polymer gel, which comprises removing the polymer gel from the reactor when the temperature of the polymer gel formed in the course of the polymerization is at least 50°C and the monomer conversion is not more than 90 mol%.

2. The process according to claim 1 wherein a static polymerization is carried out in the reactor.

3. The process according to claim 1 or 2 wherein the polymer gel is removed from the reactor when the temperature of the polymer gel formed in the course of the polymerization is at least 65°C.

4. The process according to any one of claims 1 to 3 wherein the polymer gel is removed from the reactor before attaining the peak temperature, which is the highest temperature which is reached in the course of the polymerization.

5. The process according to claim 4 wherein the peak temperature is in the range from 80 to 110°C.

6. The process according to any one of claims 1 to 5 wherein the solids content of the monomer solution is in the range from 23% to 70% by weight.

7. The process according to any one of claims 1 to 6 wherein the starting temperature of the polymerization is in the range from 0 to 30°C.

8. The process according to any one of claims 1 to 7 wherein the polymer gel is divided.

9. The process according to claims 8 wherein at least one release agent is added to the Polymer gel.

10. The process according to claim 9 wherein dried water-absorbing polymeric particles are used as release agent.

11. The process according to claim 9 or 10 wherein the release agent has an average particle size of less than 300 µm, determined according to EDANA 420.2-02.

12. The process according to any one of claims 8 to 11 wherein the polymer gel is divided in a kneader.

13. The process according to any one of claim 8 to 12 wherein the polymer gel after the dividing is stored under inert gas and/or at reduced pressure for 0.2 to 12 hours.

14. The process according to any one of claims 1 to 13 wherein the polymer gel is postneutralized,

15. The process according to any one of claims 1 to 14 wherein the polymer gel is dried, classified and postcrosslinked.

## Revendications

1. Procédé pour la production de particules de polymère absorbant l'eau, par transformation d'une solution de monomère en un gel de polymère, **caractérisé en ce que** le gel de polymère est retiré du réacteur lorsque la température du gel de polymère formé lors de la polymérisation est d'au moins 50 °C et le degré de conversion du monomètre est au maximum de 90 % en moles.

2. Procédé selon la revendication 1, **caractérisé en ce qu'**une polymérisation statistique est effectuée dans le réacteur.

3. Procédé selon la revendication 1 ou 2, **caractérisé en ce que** le gel de polymère est retiré du réacteur lorsque la température du gel de polymère formé lors de la polymérisation est d'au moins 65 °C.

4. Procédé selon l'une quelconque des revendications 1 à 3, **caractérisé en ce que** le gel de polymère est retiré du réacteur avant que soit atteinte la température maximale qui est la température la plus élevée qui est atteinte au cours de la polymérisation.

5. Procédé selon la revendication 4, **caractérisé en ce que** la température maximale se situe dans la plage allant de 80 à 110 °C.

6. Procédé selon l'une quelconque des revendications 1 à 5, **caractérisé en ce que** la tenseur en matières solides de la solution de monomère vaut de 23 à 70 % en poids.

7. Procédé selon l'une quelconque des revendications 1 à 6, **caractérisé en ce que** la température initiale de la polymérisation vaut de 0 à 30 °C.

8. Procédé selon l'une quelconque des revendications 1. à 7, **caractérisé en ce que** le gel de polymère est fragmenté.

9. Procédé selon la revendication 8, **caractérisé en ce qu'**au moins un agent de séparation est ajouté au gel de polymère.

10. Procédé selon la revendication 9, **caractérisé en ce qu'**on utilise comme agent de séparation des particules de polymère absorbant l'eau, séchées.

11. Procédé selon la revendication 9 ou 10, **caractérisé en ce que** l'agent de séparation a une taille moyenne de particule de moins de 300 µm, déterminée selon EDANA 420.2-02.

12. Procédé selon l'une quelconque des revendications 8 à 11, **caractérisé en ce que** le gel de polymères est fragmenté dans un malaxeur.

13. Procédé selon l'une quelconque des revendications 8 à 12, **caractérisé en ce qu'**après la fragmentation le gel de polymère est stocké pendant 0,2 à 12 heures sous gaz inerte et/ou sous une dépression.

14. Procédé selon l'une quelconque des revendications 1 à 13, **caractérisé en ce que** le gel de polymère est post-neutralisé.

15. Procédé selon l'une quelconque des revendications 1 à 14, **caractérisé en ce que** le gel de polymère est séché, classé et post-réticulé.
